# EUROPÄISCHE PATENTANMELDUNG

(11) **EP 4 520 168 A1**
(43) Veröffentlichungstag der Anmeldung: **12.03.2025**
(21) Anmeldenummer: 24199042.3
(22) Anmeldetag: 06.09.2024
(51) Int. Cl.: A01K 9/00

(54) **SÄUGVORRICHTUNG SOWIE GRUNDKÖRPER FÜR EINE SÄUGVORRICHTUNG**

(30) Priorität: 08.09.2023 DE 102023124276
(71) Anmelder: Albert Kerbl GmbH, 84428 Buchbach (DE)
(72) Erfinder: Kerbl, Ulli, 84428 Buchbach (DE)
(74) Vertreter: Kalkoff & Partner Patentanwälte mbB

(57) **Zusammenfassung**

Die Erfindung betrifft einen Grundkörper (5) für eine Säugvorrichtung (1a, 1b, 1c) zur Verbindung mit einem Tränkebehälter (18), insbesondere einem Tränkeeimer, mit einer Einlassöffnung (6) an einem behälterinnenseitig anordbaren Leitungsabschnitt (29) und einer Auslassöffnung (7) an einem behälteraußenseitig anordbaren Anschlussabschnitt (28) und einen sich entlang einer Längsachse im Bereich zwischen der Einlassöffnung und der Auslassöffnung erstreckenden Längskanal (22). Ferner betrifft die Erfindung eine Säugvorrichtung mit einem vorstehenden Grundkörper. Um einen Grundkörper sowie eine Säugvorrichtung mit einem Grundkörper bereitzustellen, der sich besonders einfach und zuverlässig reinigen lässt, ist vorgesehen, dass der Längskanal (22) derart ausgebildet ist, dass sich dessen Längsachse durch die Auslassöffnung (7) erstreckt.

## Beschreibung

Die Erfindung betrifft einen Grundkörper für eine Säugvorrichtung zur Verbindung mit einem Tränkebehälter, insbesondere einem Tränkeeimer, mit
- einer Einlassöffnung an einem behälterinnenseitig anordbaren Leitungsabschnitt und einer Auslassöffnung an einem behälteraußenseitig anordbaren Anschlussabschnitt und
- einen sich entlang einer Längsachse im Bereich zwischen der Einlassöffnung und der Auslassöffnung erstreckenden Längskanal.

Ferner betrifft die Erfindung eine Säugvorrichtung mit einem vorstehenden Grundkörper.

Säugvorrichtungen der eingangs genannten Art sind in vielfältigen Ausgestaltungen aus dem Stand der Technik bekannt. Mit einer Säugvorrichtung ausgestattete Tränkebehälter, bevorzugt Tränkeeimer, werden dazu genutzt, um Jungtiere mit einer im Tränkebehälter angeordneten Flüssigkeit zu füttern. Die Säugvorrichtung erstreckt sich dabei durch eine vorzugsweise in einem Bodenbereich eines Tränkeeimers angeordnete Behälteröffnung in der Behälterwand und erlaubt es dem zu säugenden Tier, die in dem Behälter befindliche Flüssigkeit über einen üblicherweise flexibel ausgestalteten Sauger zu entnehmen, wobei aufgrund des beim Saugen entstehenden Unterdrucks die im Tränkebehälter angeordnete Flüssigkeit durch den Grundkörper zu einer Austrittsöffnung an den Sauger strömt, aus der dann die Flüssigkeit austritt.

Für einen störungsfreien Betrieb ist es von besonderer Bedeutung, dass die Säugvorrichtung in der Gebrauchslage, d. h. in der zur Nutzung an dem Tränkebehälter montierten Position, in sich flüssigkeitsdicht sowie flüssigkeitsdicht mit dem Tränkebehälter verbunden ist, um ein unkontrolliertes Austreten der Flüssigkeit zu vermeiden.

Ein wichtiges Element der bekannten Säugvorrichtung ist dabei der Grundkörper, der sich durch die vorzugsweise im Bodenbereich des Tränkeeimers angeordnete Behälteröffnung erstreckt, sodass ein Leitungsabschnitt im Behälterinneren und ein Anschlussabschnitt mindestens abschnittsweise außenseitig des Behälters angeordnet ist und dabei zur Anordnung des Saugers an dem Grundkörper ausgebildet ist.

Während des Tränkvorgangs gelangt die Flüssigkeit aus dem Tränkebehälter in die Einlassöffnung des Leitungsabschnitts und fließt dann durch den Längskanal zum Verbindungsabschnitt, aus dem die Flüssigkeit dann aus der Auslassöffnung aus dem Grundkörper aus und in einen Sauger eintritt. Die Auslassöffnung liegt dabei in einer Ebene, die durch die der Eintrittsöffnung des Saugers zugewandte Stirnseite des Grundkörpers aufgespannt wird und ist dabei durch den Öffnungsquerschnitt der Auslassöffnung begrenzt.

Um Krankheiten vorzubeugen, ist es erforderlich, die flüssigkeitsführenden Teile der Säugvorrichtung, und somit auch des Grundkörpers, regelmäßig zu reinigen. Eine Herausforderung stellt dabei der sich im Bereich zwischen der Auslassöffnung und der Einlassöffnung erstreckende Längskanal dar, welcher aufgrund seines geringen Öffnungsquerschnitts zu Ablagerungen und folglich zu Verunreinigungen neigt. Bekannte Grundkörper weisen dabei den Nachteil auf, dass diese nur eine unzureichende Zugänglichkeit zum Längskanal aufweisen, was in der Folge dazu führt, dass dieser nicht vollständig gereinigt werden kann und es somit zu einer dauerhaften Verunreinigung der Tränkeflüssigkeit kommen kann.

Hiervon ausgehend liegt der Erfindung die Aufgabe zugrunde, einen Grundkörper sowie eine Säugvorrichtung mit einem Grundkörper bereitzustellen, der sich besonders einfach und zuverlässig reinigen lässt.

Die Erfindung löst die Aufgabe durch einen Grundkörper mit den Merkmalen des Anspruchs 1 sowie durch eine Säugvorrichtung mit den Merkmalen des Anspruchs 9. Vorteilhafte Weiterbildungen des Grundkörpers sind in den abhängigen Ansprüchen 2 bis 8 angegeben. Anspruch 10 beschreibt eine Weiterbildung der erfindungsgemäßen Säugvorrichtung.

Kennzeichnend für den erfindungsgemäßen Grundkörper ist, dass der Längskanal derart ausgebildet ist, dass sich dessen Längsachse durch die Auslassöffnung erstreckt.

Erfindungsgemäß ist demnach vorgesehen, dass die Orientierung des Längskanals gegenüber der Auslassöffnung derart gewählt ist, dass die Längsachse des Längskanals die Auslassöffnung schneidet, d. h. sich nicht durch Abschnitte des Grundkörpers erstreckt. In seiner gedachten Verlängerung schneidet die Längsachse des Längskanals nicht die die Auslassöffnung begrenzende Wandung des Grundkörpers.

Eine derartige Ausgestaltung des Grundkörpers ermöglicht eine gute Zugänglichkeit des Längskanals zu dessen Reinigung, bspw. mit einer sich geradlinig erstreckenden Rundbürste, welche ggf. zur Reinigung des Grundkörpers durch die Auslassöffnung ungehindert in den Längskanal eingeführt werden kann, um diesen von Verunreinigungen zu befreien. Die Längserstreckung des Längskanals, d. h. ohne Abwinkelungen oder Knicke, erleichtert überdies dessen Reinigung, sodass die Säugvorrichtung ggf. in einfacher Weise zuverlässig gereinigt werden kann. Sämtliche Verunreinigungen können durch eine Reinigung zuverlässig abgetragen werden, wobei das Reinigungsmittel, bspw. eine Rundbürste, die sich geradlinig erstreckt, ungehindert ausgehend von der Auslassöffnung geradlinig durch den Längskanal hindurchgeführt werden kann.

Für eine zuverlässige Reinigung ist es bereits ausreichend, wenn eine sich mittig durch den Längskanal erstreckende Längsachse die Auslassöffnung schneidet, wodurch die Möglichkeit einer einfachen Reinigung durch eine entsprechende Zugänglichkeit zum Längskanal gegeben ist. Nach einer besonders vorteilhaften Ausgestaltung der Erfindung ist vorgesehen, dass eine den Querschnitt des Längskanal aufweisende Längsachse sich vollständig durch die Auslassöffnung erstreckt. Gemäß dieser Weiterbildung der Erfindung ist vorgesehen, dass der Längskanal derart gegenüber der Auslassöffnung ausgerichtet ist, dass dessen Verlängerung über den gesamten Umfang betrachtet sich vollständig durch die Austrittsöffnung erstreckt. Diese Ausgestaltung gewährleistet in besonders zuverlässiger Weise einen guten Zugang zum Längskanal und die Verwendung sich linear erstreckender Reinigungsmittel, die dann besonders einfach und zuverlässig durch den Längskanal hindurchgeführt werden können, um diesen zuverlässig von Verunreinigungen zu befreien.

Der Längskanal mündet mit seiner Längskanalaustrittsöffnung im Bereich des Anschlussabschnitts in den Grundkörper, von wo aus die Flüssigkeit dann über den Sauger zu dem zu tränkenden Tier befördert wird. Nach einer besonders vorteilhaften Ausgestaltung der Erfindung ist dabei vorgesehen, dass der Längskanal mit seiner Längskanalaustrittsöffnung, die der Einlassöffnung gegenüberliegt, in eine umfangsseitig geschlossene Ausnehmung an dem Verbindungsabschnitt mündet, insbesondere dass die Längskanalaustrittsöffnung an die Ausnehmung angrenzt.

Gemäß dieser Ausgestaltung der Erfindung ist vorgesehen, dass der Verbindungsabschnitt eine Ausnehmung aufweist, die vorzugsweise an den Sauger angepasst ist und durch die Auslassöffnung begrenzt ist. Die Ausnehmung erstreckt sich somit von der Auslassöffnung, die durch die der Eintrittsöffnung des Saugers zugewandte Stirnseite des Grundkörpers aufgespannt wird und durch den Öffnungsquerschnitt der Aufnahme begrenzt ist, innerhalb des Grundkörpers im Bereich des Anschlussabschnitts und steht in Verbindung mit dem Längskanal, der besonders bevorzugt mit seiner der Einlassöffnung gegenüberliegenden Längskanalaustrittsöffnung an die Ausnehmung angrenzt, d. h. der Längskanal schließt bündig an die Innenwand der Ausnehmung an. Hierdurch wird ein besonders gutes Strömungsverhalten gewährleistet und zudem wird die Reinigung des Grundkörpers, insbesondere im Bereich des Längskanals in ergänzender Weise vereinfacht.

Die erfindungsgemäße Ausgestaltung des Grundkörpers sieht eine Ausrichtung des Längskanals vor, bei der dieser - bezogen auf die Einbaulage an einem Tränkebehälter - nicht senkrecht zur Behälterwand, sondern in Richtung auf den Behälterboden geneigt ausgerichtet ist, wohingegen die Auslassöffnung des Grundkörpers im Wesentlichen parallel zur Behälterwand ausgerichtet ist.

Dies ermöglicht eine Orientierung des Längskanals derart, dass dieser, bezogen auf die Einbaulage, in Richtung auf einen Tränkeboden ausgerichtet ist, sodass die Einlassöffnung unmittelbar an den Boden des Tränkebehälters angrenzt und so eine im Wesentlichen vollständige Entleerung des Tränkebehälters möglich ist. Die Ausrichtung der Einlassöffnung gegenüber der Auslassöffnung ist dabei grundsätzlich frei wählbar.

Nach einer besonders vorteilhaften Ausgestaltung der Erfindung ist jedoch vorgesehen, dass sich eine durch die Einlassöffnung aufgespannte Ebene im Wesentlichen senkrecht zu einer durch die Auslassöffnung aufgespannten Ebene erstreckt. Diese Ausgestaltung der Erfindung führt zu einer - bezogen auf die Einbaulage des Grundkörpers - im Wesentlichen parallelen Ausrichtung der Einlassöffnung gegenüber dem Boden eines Tränkebehälters, wodurch eine besonderes zuverlässige Entleerung des Behälters erreicht werden kann.

Zur Anordnung des Grundkörpers an dem Tränkebehälter, insbesondere innerhalb einer Durchgangsöffnung eines Tränkeeimers, weist der Grundkörper nach einer vorteilhaften Weiterbildung der Erfindung im Bereich des Anschlussabschnitts einen Absatz zur Anlage an einer Behälterinnenwand auf, wobei der Absatz an den Anschlussabschnitt angrenzt. Diese Ausgestaltung des Grundkörpers ermöglicht eine zuverlässige Positionierung des Grundkörpers innerhalb der Öffnung in der Behälterwand, wobei mittels eines Befestigungsmittels, insbesondere einer Befestigungsmutter, der Grundkörper zuverlässig gegen die Innenwand gedrückt und somit flüssigkeitsdicht an der Behälterinnenwand angeordnet werden kann. Nach einer besonders vorteilhaften Ausgestaltung der Erfindung ist hierzu vorgesehen, dass der Anschlussabschnitt ein Außengewinde zur Aufnahme der Befestigungsmutter aufweist.

Nach einer weiteren Ausgestaltung der Erfindung ist ferner vorgesehen, dass der Grundkörper ein rückseitig vorstehendes Griffelement, insbesondere eine Haltefinne aufweist, die sich bevorzugt senkrecht zu der durch die Einlassöffnung und die Auslassöffnung aufgespannten Ebenen erstreckt. Das Griffelement erlaubt es einem Nutzer, den Grundkörper komfortabel zu greifen und folglich in einfacher Weise an dem Tränkebehälter anzuordnen und bspw. mittels eines Befestigungselements, insbesondere einer Befestigungsmutter, zu befestigen. Eine sich - bezogen auf die Einbaulage - in Richtung auf den Boden des Tränkebehälters erstreckende Haltefinne erleichtert dabei in besonderer Weise ein Ergreifen des Grundkörpers sowie dessen Ausrichtung innerhalb des Tränkebehälters in einer für die Entnahme der Tränkeflüssigkeit optimalen Position. Darüber hinaus verhindert die Längserstreckung der Haltefinne, dass sich Flüssigkeit im Bereich des Grundkörpers an diesem ansammeln.

Nach einer weiteren Ausgestaltung der Erfindung ist vorgesehen, dass der Anschlussabschnitt einen Klemmkörper, insbesondere einen Klemmring aufweist, der von einer einem Saugen zugewandten Stirnfläche vorsteht. In der Gebrauchslage drückt sich der Klemmring in die Stirnfläche des Saugers und verformt diesen im Kontaktbereich vorzugsweise elastisch, wobei jedoch auch eine plastische Verformung denkbar ist, bei der der Klemmring in die dem Grundkörper zugewandte Stirnfläche einschneidet. Der Klemmring erhöht die Lagesicherheit des Saugers in der Gebrauchslage und steigert die Dichtigkeit in ergänzender Weise.

Die Erfindung löst die Aufgabe ferner durch eine Säugvorrichtung zur Verbindung mit einem Tränkebehälter, insbesondere einem Tränkeeimer, mit
- einem Sauger mit einer Austrittsöffnung und einer Eintrittsöffnung,
- einem Grundkörper mit einer Einlassöffnung und einer Auslassöffnung,
- einem Befestigungselement zur lösbaren Festlegung des mit seiner Eintrittsöffnung im Bereich der Auslassöffnung des Grundkörpers angeordneten Saugers an dem Grundkörper und
- einem einen Flüssigkeitsstrom in Richtung auf die Austrittsöffnung freigebenden und in Richtung auf die Einlassöffnung blockierenden Ventilkörper,
wobei erfindungsgemäß vorgesehen ist, dass der Grundkörper in der vorstehenden erfindungsgemäßen oder weitergebildeten Weise ausgebildet ist.

Die erfindungsgemäße Säugvorrichtung zeichnet sich dabei dadurch aus, dass durch die Ausgestaltung des Grundkörpers diese besonderes einfach zu reinigen und ein hoher Hygienestandard eingehalten werden kann. Nach Entfernung des mit dem Grundkörper verbindbaren Saugers lässt sich der Grundkörper in einfacher Weise mittels geeigneter Reinigungsmittel, wie bspw. Rundbürsten, zuverlässig reinigen, wobei insbesondere eine Reinigung des Längskanals zuverlässig durchgeführt werden kann.

Besonders vorteilhafterweise ist dabei vorgesehen, dass der Sauger im Bereich der Eintrittsöffnung stirnseitig an einer die Auslassöffnung begrenzenden, an die Ausnehmung angrenzenden Stirnfläche des Grundkörpers anliegt. Durch diese Ausgestaltung der Erfindung wird eine besonders flüssigkeitsdichte Verbindung hergestellt, wobei gleichzeitig eine einfache Demontage der Säugvorrichtung und hiernach eine zuverlässige Reinigung möglich ist.

Ein Ausführungsbeispiel der Erfindung wird nachstehend mit Bezug auf die Zeichnungen erläutert. In den Zeichnungen zeigen:
- Fig. 1: in einer Explosionsansicht eine erste Ausführungsform einer Säugvorrichtung;
- Fig. 1a: eine Schnittansicht der Säugvorrichtung von Fig. 1;
- Fig. 2: in einer Explosionsansicht eine zweite Ausführungsform der Säugvorrichtung;
- Fig. 2a: eine Schnittansicht der Säugvorrichtung von Fig. 2;
- Fig. 3: in einer Explosionsansicht eine dritte Ausführungsform der Säugvorrichtung;
- Fig. 3a: eine Schnittansicht der Säugvorrichtung von Fig. 3;
- Fig. 4: eine Schnittansicht eines Grundkörpers der in den Fig. 1 bis 3 dargestellten Säugvorrichtung;
- Fig. 5: eine Schnittansicht eines Tränkeeimers mit einer in Fig. 1 dargestellten Säugvorrichtung sowie
- Fig. 6: eine perspektivische Ansicht des Tränkeeimers mit Säugvorrichtung.

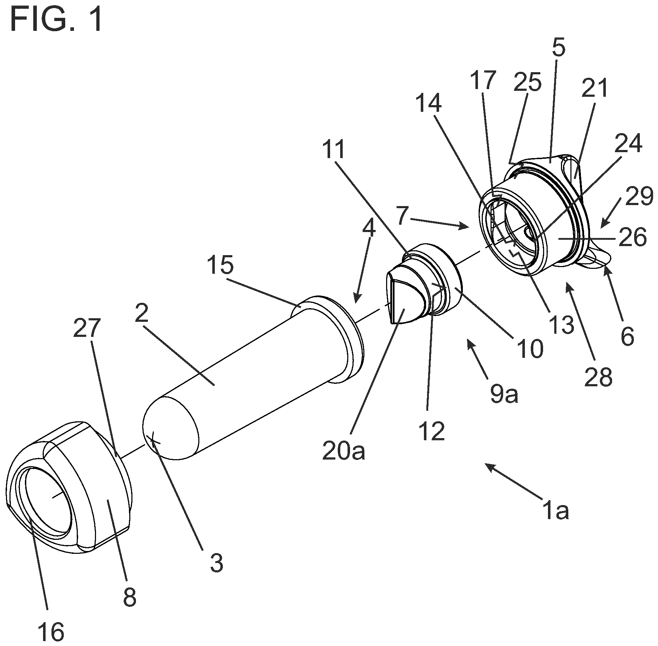

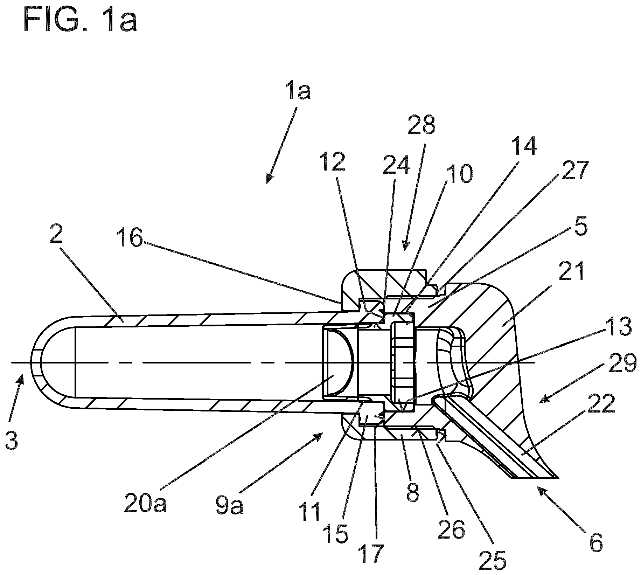

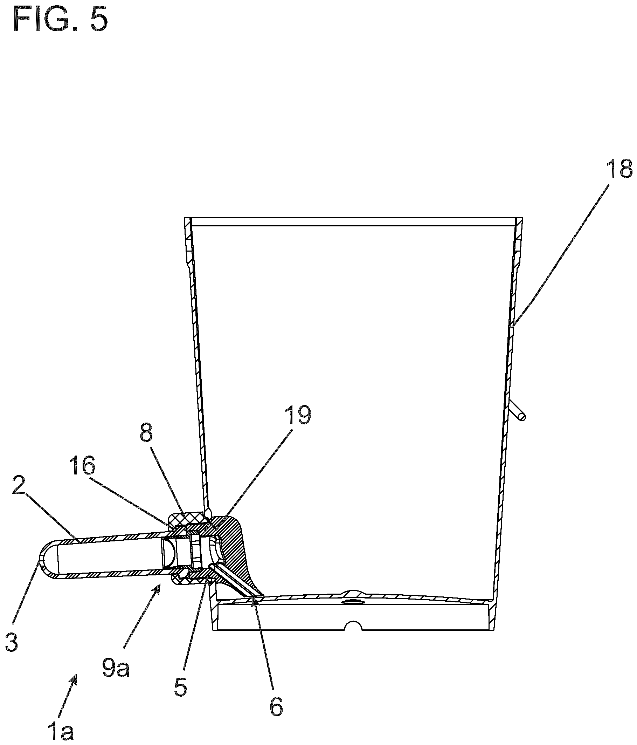

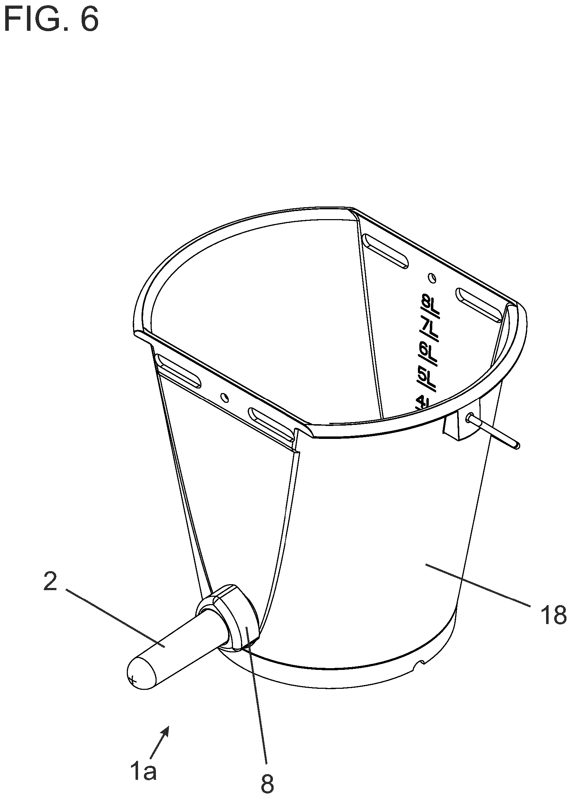

Figur 1 zeigt eine erste Ausführungsform einer Säugvorrichtung 1a in einer Explosionsansicht. Die Säugvorrichtung 1a weist dabei einen aus einem elastischen Material hergestellten Sauger 2 mit einer Austrittsöffnung 3 und einer Eintrittsöffnung 4 auf. In einer in Fig. 1 sowie in Fig. 5 und 6 dargestellten montierten Gebrauchslage der Säugvorrichtung 1a, in der die Säugvorrichtung an einem Tränkebehälter 18 angeordnet ist, erstreckt sich die Säugvorrichtung 1a durch eine Behälteröffnung 19 des Tränkebehälters 18, sodass ein zu säugendes Tier eine innerhalb des Tränkebehälters 18 angeordnete Tränkeflüssigkeit über die Austrittsöffnung 3 entnehmen kann.

Zur Festlegung der Säugvorrichtung 1a an dem Tränkebehälter 18 weist die Säugvorrichtung 1a einen Grundkörper 5 auf, welcher sich durch die Behälteröffnung 19 hindurch erstreckt und innenseitig mit einem umlaufenden Absatz 25 an der Behälterinnenwand anliegt, sodass ein Anschlussabschnitt 28 des Grundkörpers 5 außenseitig am Tränkebehälter 18 und ein Leitungsabschnitt 29 im Inneren des Tränkebehälters 18 angeordnet ist. Zur Festlegung des Saugers 2 an dem Grundkörper 5 der Saugvorrichtung 1a dient eine Befestigungsmutter 8, welche in der Gebrauchslage gegen eine Außenseite des Tränkebehälters 18 auf ein Außengewinde 26 des Grundkörpers 5 aufgeschraubt ist. In der Gebrauchslage zieht die Befestigungsmutter 8 den Grundkörper mit dem Absatz 25 gegen die Behälterinnenwand, wobei die Befestigungsmutter 8 dabei mit ihrer dem Grundkörper 5 zugewandten Stirnseite außenseitig mit einer umlaufenden Dichtlippe 27 an Tränkebehälter 18 anliegt.

Die Befestigungsmutter 8 dient darüber hinaus zur Festlegung des Saugers 2 an dem Grundkörper 5. In der Gebrauchslage ist die Befestigungsmutter 8 koaxial zu einem im Bereich der Eintrittsöffnung 4 angeordneten Saugerflansch 15 angeordnet. Im montierten Zustand der Befestigungsmutter 8 an dem Grundkörper 5 liegt ein radial in Richtung auf den Sauger 2 vorstehender Klemmvorsprung 16 der Befestigungsmutter 8 mit einer radial ausgerichteten Kontaktfläche an der Umfangsfläche des Saugers 2 und mit einer in Längsachsenrichtung des Saugers ausgerichteten Stirnfläche stirnseitig an dem Saugerflansch 15 an und drückt diesen gegen eine Stirnfläche 17 des Grundkörpers 5. Dabei bewirkt die Befestigungsmutter 8 auch eine Anlage eines stirnseitigen Abschnitts des Saugerflanschs 15 an einem Ventilkörperabsatz 12 eines Ventilkörpers 9a.

Der Ventilkörper 9a weist dabei einen Grundkörperabschnitt 10 sowie einen Saugerabschnitt 11 auf. Der Grundkörperabschnitt 10 weist einen an den Querschnitt einer Ausnehmung 13 des Grundkörpers 5 angepassten Querschnitt zur spielfreien Anordnung auf, der größer ist als der Querschnitt des Saugabschnitts 11, so dass dieser und der Grundkörperabschnitt 10 über einen Ventilkörperabsatz 12 miteinander verbunden sind. Der Grundkörperabschnitt 10 ist in der Gebrauchslage innerhalb einer Ausnehmung 13 an dem Grundkörper 5 angeordnet und liegt in axialer Richtung an einem Absatz 14 innerhalb der Ausnehmung 13 an. In der montierten Lage des Ventilkörpers 9a in der Ausnehmung 13 verläuft dabei der Ventilkörperabsatz 12 im Wesentlichen flächenbündig mit der Stirnfläche 17 des Grundkörpers 5.

Die dem Grundkörper 5 zugewandte Stirnfläche des Saugerflanschs 15 liegt in der Gebrauchslage sowohl an dem Ventilkörperabsatz 12 als auch an der Stirnfläche 17 des Grundkörpers 5 an. Gleichzeitig ist der Sauger 2 in der Gebrauchslage im Bereich seiner Eintrittsöffnung 4 koaxial zu einem Saugerabschnitt 11 des Ventilkörpers 9a angeordnet. In der montierten Lage der Befestigungsmutter 8 an dem Grundkörper 5 bildet der Klemmvorsprung 16 mit dem Saugerabschnitt 11 in radialer Richtung eine den Sauger 2 gegenüber dem Ventilkörper 9a abdichtende Engstelle.

Der Klemmvorsprung 16 drückt überdies aufgrund seiner in axialer Richtung an dem Saugerflansch 15 bestehenden Anlage den Saugerflansch 15 an den Ventilkörperabsatz 12 sowie an die die Ausnehmung 13 umlaufende Stirnfläche 17 des Grundkörpers 5. In der montierten Lage drückt sich dabei zudem ein von der Stirnfläche 17 vorstehender Klemmring 24 in die Stirnfläche des Saugerflanschs 15 und erhöht somit die Lagesicherheit des Saugers 2 an dem Grundkörper 5 sowie die Dichtigkeit der Säugvorrichtung 1a gegenüber einem Flüssigkeitsaustritt aus deren Inneren. Die Dichtigkeit in der Gebrauchslage der Säugvorrichtung 1a an dem Tränkebehälter 18 wird dabei in ergänzender Weise durch die in Richtung auf den Grundkörper 5 vorstehende Dichtlippe 27 an der Befestigungsmutter 8 erhöht, welche in der montierten Lage der Saugvorrichtung 1a an der Außenwand des Tränkebehälters 18 anliegt.

Die in dem Tränkebehälter 18 angeordnete Tränkeflüssigkeit gelangt während des Saugvorgangs des zu säugenden Tieres über eine Einlassöffnung 6 des Grundkörpers 5 durch einen Längskanal 22 im Leitungsabschnitt 29 in den Bereich der Ausnehmung 13 des Anschlussabschnitts 28 an dem Grundkörper 5, von wo aus die Tränkeflüssigkeit dann über die Auslassöffnung 7 in den Sauger 2 gelangt. Der Längskanal 22 verläuft dabei derart an dem Grundkörper 5, so dass sich dessen Längsachse vollständig durch die durch die Auslassöffnung 7 aufgespannte Ebene erstreckt. D. h., in seiner gedachten Verlängerung schneidet der Querschnitt des Längskanals 22 nicht die die Ausnehmung 13 begrenzende Außenwand des Grundkörpers 5, wodurch eine gute Zugänglichkeit des Längskanals 22 für Reinigungswerkzeug, bspw. eine Reinigungsbürste gewährleistet ist.

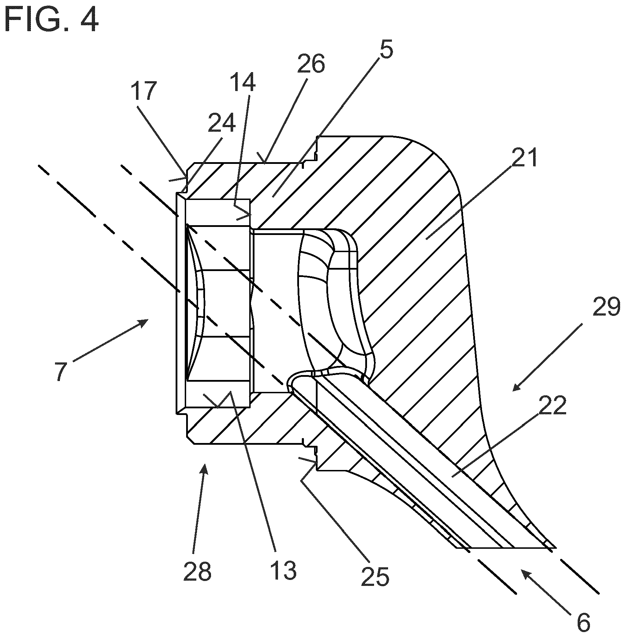

An dem in Figur 4 dargestellten Grundkörper 5 verläuft die durch die Einlassöffnung 6 aufgespannte Ebene im Wesentlichen senkrecht zu der durch die Auslassöffnung 7 aufgespannten Ebene, sodass die Einlassöffnung 6 im Wesentlichen parallel zu einem Boden des Tränkebehälters 18 angeordnet ist, wodurch eine gute, im Wesentlichen vollständige Entnahme der Flüssigkeit aus dem Tränkebehälter 18 möglich ist. Ein rückseitig an dem Grundkörper 5 angeordnetes, als Haltefinne 21 ausgebildetes Griffelement erlaubt ein gutes Ergreifen des Grundkörpers 5 und eine zuverlässige Ausrichtung und Montage der Säugvorrichtung 1a an dem Tränkebehälter 18 innerhalb der Behälteröffnung 19.

In dem in Figur 1 und 1a dargestellten Ausführungsbeispiel der Säugvorrichtung 1a weist der Ventilkörper 9a ein als Membran 20a ausgebildetes Ventilelement auf, welches eine Strömung der Tränkeflüssigkeit in Richtung auf die Austrittsöffnung 3 des Saugers 2 freigibt, jedoch eine entgegengesetzte Strömung der Tränkeflüssigkeit blockiert.

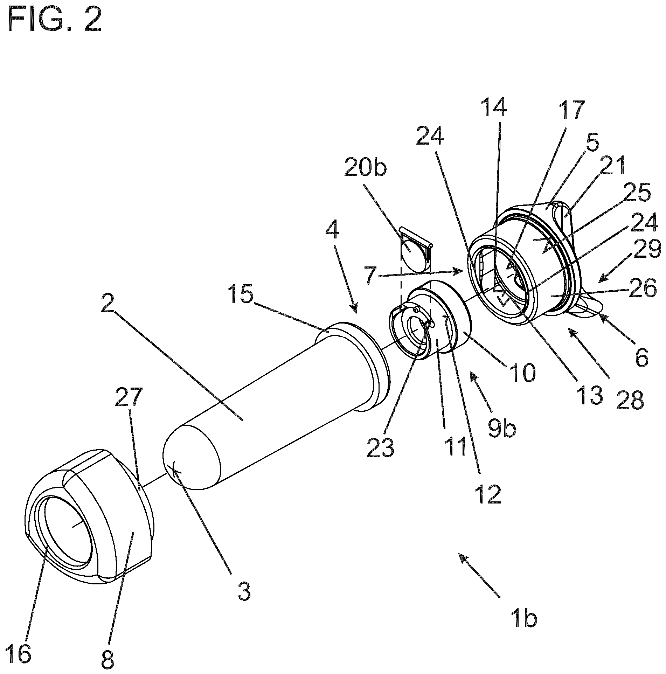

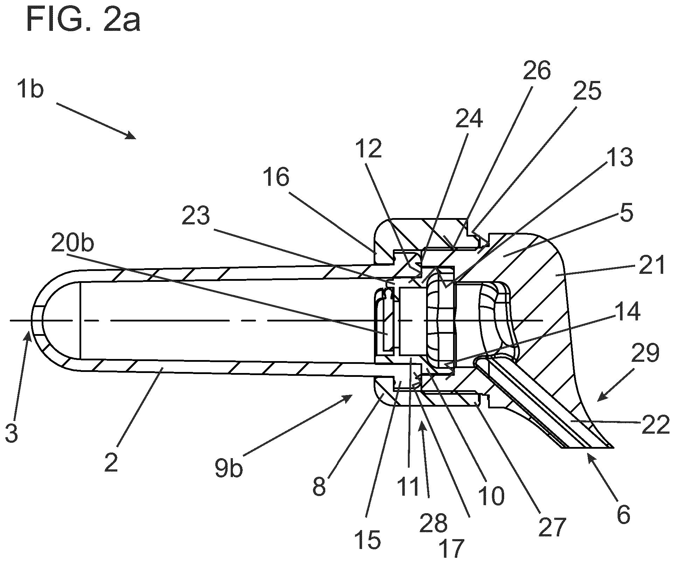

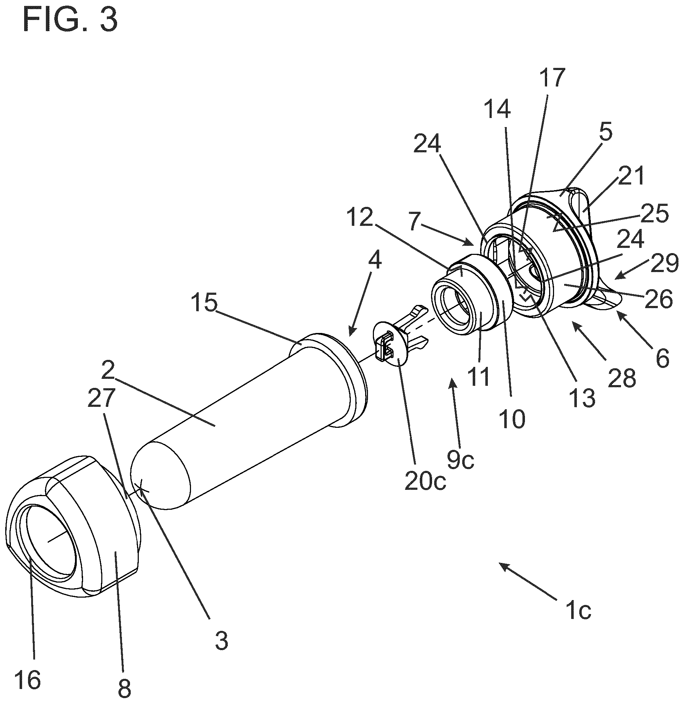

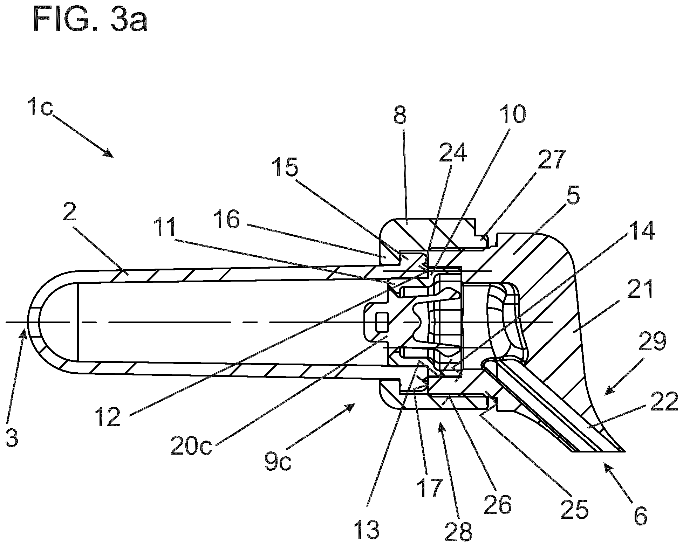

Zwei weitere Ausführungsbeispiele der Säugvorrichtung 1b, 1c sind in den Figuren 2, 2a und 3, 3a dargestellt. Diese unterscheiden sich von der in Figur 1 dargestellten Säugvorrichtung 1a dadurch, dass der Ventilkörper 9b der Säugvorrichtung 1b durch eine Klappe 20b gebildet ist, die an einer Halterung 23 des Ventilkörpers 9b gelagert ist und wie bei dem in Figur 1 dargestellten Ausführungsbeispiel der Säugvorrichtung 1a einen Flüssigkeitsstrom in Richtung auf die Austrittsöffnung freigibt, jedoch einen entgegengesetzten Flüssigkeitsstrom blockiert.

Bei dem in Figur 3 dargestellten Ausführungsbeispiel der Säugvorrichtung 1c weist der Ventilkörper 9c einen in Längsachsenrichtung verstellbaren Ventilstößel 20c auf, welcher ebenfalls einen Flüssigkeitsstrom in Richtung auf die Austrittsöffnung 3 freigibt, jedoch einen entgegengesetzten Flüssigkeitsstrom durch den Ventilkörper 9c blockiert. Der Ventilstößel 20c und der Saugerabschnitt 10 bilden dabei einen entsprechenden Ventilsitz.

### Bezugszeichenliste

- 1a, 1b, 1c: Säugvorrichtung
- 2: Sauger
- 3: Austrittsöffnung
- 4: Eintrittsöffnung
- 5: Grundkörper
- 6: Einlassöffnung
- 7: Auslassöffnung
- 8: Befestigungselement/Befestigungsmutter
- 9a, 9b, 9c: Ventilkörper
- 10: Grundkörperabschnitt
- 11: Saugerabschnitt
- 12: Ventilkörperabsatz
- 13: Ausnehmung
- 14: Absatz
- 15: Saugerflansch
- 16: Klemmvorsprung
- 17: Stirnfläche Grundkörper
- 18: Tränkebehälter
- 19: Behälteröffnung
- 20a, 20b, 20c: Ventilelement (Membran, Klappe, Stößel)
- 21: Griffelement/Haltefinne
- 22: Längskanal
- 23: Halterung
- 24: Klemmring
- 25: Absatz
- 26: Außengewinde
- 27: Dichtlippe
- 28: Anschlussabschnitt
- 29: Leitungsabschnitt

## Patentansprüche

1. Grundkörper für eine Säugvorrichtung zur Verbindung mit einem Tränkebehälter, insbesondere einem Tränkeeimer, mit
- einer Einlassöffnung (6) an einem behälterinnenseitig anordbaren Leitungsabschnitt (29) und einer Auslassöffnung (7) an einem behälteraußenseitig anordbaren Anschlussabschnitt (28) und
- einem sich entlang einer Längsachse im Bereich zwischen der Einlassöffnung (6) und der Auslassöffnung (7) erstreckenden Längskanal (22),
**dadurch gekennzeichnet, dass**
der Längskanal (22) derart ausgebildet ist, dass sich dessen Längsachse durch die Auslassöffnung (7) erstreckt.

2. Grundkörper nach Anspruch 1, **dadurch gekennzeichnet, dass** eine den Querschnitt des Längskanals (22) aufweisende Längsachse sich vollständig durch die Auslassöffnung (7) erstreckt.

3. Grundkörper nach Anspruch 1 oder 2, **dadurch gekennzeichnet, dass** der Längskanal (22) mit seinem der Einlassöffnung (6) gegenüberliegenden Ende in eine umfangsseitig geschlossene Ausnehmung (13) an dem Anschlussabschnitt (28) mündet, insbesondere an die Ausnehmung (13) angrenzt.

4. Grundkörper nach einem oder mehreren der vorhergehenden Ansprüche,
**dadurch gekennzeichnet, dass** sich eine durch die Einlassöffnung (6) aufgespannte Ebene im Wesentlichen senkrecht zu einer durch die Auslassöffnung (7) aufgespannten Ebene erstreckt.

5. Grundkörper nach einem oder mehreren der vorhergehenden Ansprüche,
**dadurch gekennzeichnet, dass** der Anschlussabschnitt (28) ein Außengewinde (26) aufweist.

6. Grundkörper nach einem oder mehreren der vorhergehenden Ansprüche,
**dadurch gekennzeichnet, dass** an den Anschlussabschnitt (28) ein Absatz zur Anlage an einer Behälterinnenwand angrenzt.

7. Grundkörper nach einem oder mehreren der vorhergehenden Ansprüche, **gekennzeichnet durch** ein rückseitig vorstehendes Griffelement, insbesondere eine Haltefinne (21), die sich bevorzugt senkrecht zu der durch die Einlassöffnung (6) und die Auslassöffnung (7) aufgespannten Ebenen erstreckt.

8. Grundkörper nach einem oder mehreren der vorhergehenden Ansprüche,
**dadurch gekennzeichnet, dass** der Anschlussabschnitt (28) einen Klemmkörper, insbesondere einen Klemmring (24) aufweist, der von einer einem Sauger (2) zugewandten Stirnfläche vorsteht.

9. Säugvorrichtung zur Verbindung mit einem Tränkebehälter, insbesondere einem Tränkeeimer, mit
- einem Sauger (2) mit einer Austrittsöffnung (3) und einer Eintrittsöffnung (4),
- einem Grundkörper (5) mit einer Einlassöffnung (6) und einer Auslassöffnung (7),
- einem Befestigungselement (8) zur lösbaren Festlegung des mit seiner Eintrittsöffnung (4) im Bereich der Auslassöffnung (7) des Grundkörpers (5) angeordneten Saugers (2) an dem Grundkörper (5) und
- einem einen Flüssigkeitsstrom in Richtung auf die Austrittsöffnung (3) freigebenden und in Richtung auf die Einlassöffnung (6) blockierenden Ventilkörper (9a, 9b, 9c),
**dadurch gekennzeichnet, dass**
der Grundkörper (5) nach einem oder mehreren der Ansprüche 1 bis 8 ausgebildet ist.

10. Säugvorrichtung nach Anspruch 9, **dadurch gekennzeichnet, dass** der Sauger (2) im Bereich der Eintrittsöffnung (4) stirnseitig an einer die Auslassöffnung (7) begrenzenden, an die Ausnehmung (13) angrenzenden Stirnfläche (17) des Grundkörpers (5) anliegt.
